# EUROPÄISCHE PATENTSCHRIFT

(11) **EP 2 608 992 B1**
(45) Veröffentlichungstag und Bekanntmachung des Hinweises auf die Patenterteilung: **06.05.2015**
(21) Anmeldenummer: 11739041.9
(22) Anmeldetag: 28.07.2011
(51) Int. Cl.: B60S 1/38

(54) **WISCHERSCHIENENELEMENT MIT INTEGRIERTER WISCHERARMANBINDUNG**
WIPER RAIL ELEMENT HAVING AN INTEGRATED WIPER ARM CONNECTION
ÉLÉMENT PORTE-BALAI D'ESSUIE-GLACE COMPORTANT UNE ATTACHE INTÉGRÉE POUR BRAS D'ESSUIE-GLACE

(30) Priorität: 26.08.2010 DE 102010039788
(43) Veröffentlichungstag der Anmeldung: 03.07.2013
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2011/062990
(87) Internationale Veröffentlichungsnummer: WO 2012/025326

(56) Entgegenhaltungen:
- DE-A1- 10 038 395
- DE-A1-102005 048 344
- FR-A- 1 446 657
- FR-A1- 2 487 758
- FR-A1- 2 755 926
- FR-A1- 2 755 927
- US-A- 3 041 653
- US-A1- 2007 180 643

## Beschreibung

Die Erfindung betrifft ein Wischerschienenelement mit einer integrierten Wischerarmanbindung, sowie eine Wischereinrichtung mit einem Wischerschienenelement und einem dort befestigten Wischerblatt zum Wischen einer Scheibe, insbesondere einer Fahrzeugscheibe.

### Stand der Technik

Aus dem Stand der Technik, wie er in der US 3 480 986 offenbart ist, ist ein Wischer für eine Fahrzeugscheibe bekannt. Der Wischer weist dabei eine Federschiene auf, deren Breite und Dicke sich von ihrem einen, inneren Ende, mit dem sie mit einem Antrieb verbunden ist, zu ihrem anderen, äußeren Ende hin konisch verjüngt. Hierbei ist die Federschiene mit ihrem breiten, inneren Ende über einen Antriebsadapter mit dem Antrieb verbunden, um den Wischer zu betätigen. Der Antriebsadapter weist dabei zwei seitliche Flanschabschnitte auf, die das breite, innere Ende der Federschiene aufnehmen. Die Federschiene wird dabei zusätzlich über eine Schraube in dem Antriebsadapter gesichert. Des Weiteren ist ein Wischergummi vorgesehen, welcher eine Hülle bildet, mit dem der Wischergummi auf die Federschiene aufgeschoben wird, wobei die Hülle sich in ihrer Breite dabei wie die Federschiene entsprechend konisch verjüngt. Die Hülle ist hierbei an ihren beiden Enden offen ausgebildet und mit einer Wischerlippe ausgebildet bzw. verbunden.

Aus der FR 2 755 926 ist ein Wischerschienenelement mit einem Schienenelement zur Aufnahme eines Wischblatts und Anbindungsabschnitt, der als Haken zum Einhaken und Befestigen an einem Wischarm ausgebildet ist, bekannt.

### Offenbarung der Erfindung

Gemäß der Erfindung wird nun ein verbessertes Wischerschienenelement, sowie eine Wischerschieneneinrichtung mit einem solchen Wischerschienenelement bereitgestellt.

Dabei wird ein Wischerschienenelement bereitgestellt, mit einem Schienenelement zur Aufnahme eines Wischerblatts, wobei das Wischerschienenelement außerdem einen Anbindungsabschnitt aufweist welcher derart ausgebildet ist, dass er in einer Aufnahmeeinrichtung des Wischerarms einhakbar ist.

Das Wischerschienenelement hat dabei den Vorteil, dass es eine integrierte Anbindung aufweist, nämlich einen Anbindungsabschnitt, der in einer Aufnahmeeinrichtung des Wischerarms aufgenommen oder eingehakt wird, um das Wischerschienenelement mit dem Wischerarm und einem damit verbundenen Wischerarmantrieb zu verbinden. Im Gegensatz dazu weist die Federschiene im Stand der Technik keinen Anbindungsabschnitt auf, sondern muss an dem Wischerarm bzw. einem Adapter angeschraubt werden.

Weitere bevorzugte Ausführungsformen sind in den Unteransprüchen beschrieben.

In einer Ausführungsform der Erfindung ist der Anbindungsabschnitt mit einer Aufnahmeeinrichtung eines Wischerarms fest oder lösbar verbindbar, insbesondere mittels Schweißen, Löten, Verprägen, Verkleben, Verschrauben, Vernieten, Verrasten und/oder Verklipsen.

In einer anderen Ausführungsform ist der Anbindungsabschnitt in Form eines Hakens beispielsweise U-förmig ausgebildet, mit einem ersten Abschnitt und einem zweiten Abschnitt, welche über einen Mittenabschnitt miteinander verbunden sind. Der zweite Abschnitt ist mit dem Schienenelement verbunden und der erste Abschnitt ist in eine Aufnahmeeinrichtung des Wischerarms einführbar oder einhakbar zur Befestigung des Wischerschienenelements an dem Wischerarm. Der U-förmige Haken hat den Vorteil, dass er zusätzlich als Feder fungieren kann und eine Anpassung des Schienenelements an eine zu wischende Scheibe erlaubt.

Erfindungsgemäß ist der Anbindungsabschnitt gegenüber dem Schienenelement erhöht vorgesehen. Dadurch kann der Anbindungsabschnitt zusätzlich federn. Erfindungsgemäß ist der Anbindungsabschnitt mit dem Schienenelement über einen Absatz oder wenigstens eine Stufe verbunden. Der Absatz oder die Abstufung hat den Vorteil, dass sie einem Kippen des Schienenelements entgegenwirkt.

Ausführungsformen der Erfindung werden nachstehend anhand der schematischen Figuren der Zeichnung näher erläutert. Es zeigen:
Fig. 1 eine Perspektivansicht eines Wischerschienenelements gemäß der Erfindung;
Fig. 2 eine Seitenansicht des Wischerschienenelements gemäß Fig. 1;
Fig. 3 einen vergrößerten Ausschnitt des Wischerscherschienenelements gemäß Fig. 2;
Fig. 4 eine Draufsicht auf das Wischerschienenelement gemäß Fig. 1 und 2;
Fig. 5 eine Seitenansicht einer Wischereinrichtung mit einem Wischerschienenelement gemäß Fig. 1, wobei in dem Wischerschienenelement ein Wischerblatt aufgenommen ist;
Fig. 6 einen Ausschnitt der Befestigung des Wischerschienenelements in der Wischereinrichtung gemäß Fig. 5;
Fig. 7 eine Draufsicht auf einen Ausschnitt der Wischerschienenelementbefestigung gemäß Fig. 6; und
Fig. 8 eine Schnittansicht A-A durch den Bereich der Anbindung von Wischerarm und Wischerschienenelement gemäß Fig. 7.

In allen Figuren sind gleiche bzw. funktionsgleiche Elemente und Vorrichtungen - sofern nichts anderes angegeben ist - mit denselben Bezugszeichen versehen worden.

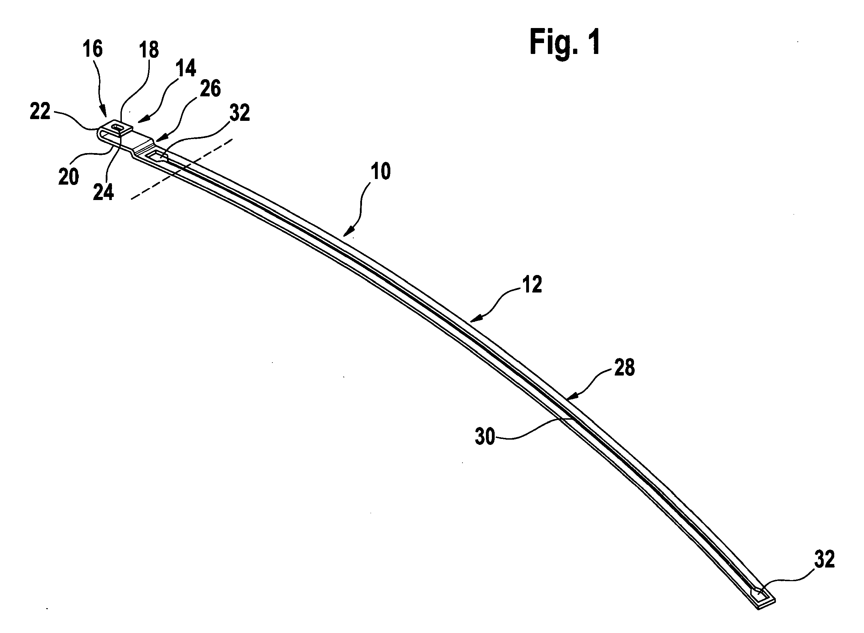

In Fig. 1 ist eine Perspektivansicht eines Wischerschienenelements 10 gemäß der Erfindung gezeigt, zum Verbinden mit einem Wischerarm, um eine Wischereinrichtung zu bilden.

Das Wischerschienenelement 10 ist dabei beispielsweise aus einem Metallblech hergestellt oder weist dieses auf und bildet eine Federschiene oder ein Schienenelement 12. In das Wischerschienenelement 10 oder die Federschiene 12, welche derart ausgebildet ist, dass sie die Kraft auf eine zu wischende Scheibe z.B. möglichst gleichmäßig verteilt, ist eine zusätzliche Geometrie, nämlich ein Anbindungsabschnitt 14, integriert oder fest verbunden, der für die Anbindung in einen Wischerarm sorgt. Die Anbindung ist dabei lösbar oder fest verbunden mit Wischerarm vorgesehen.

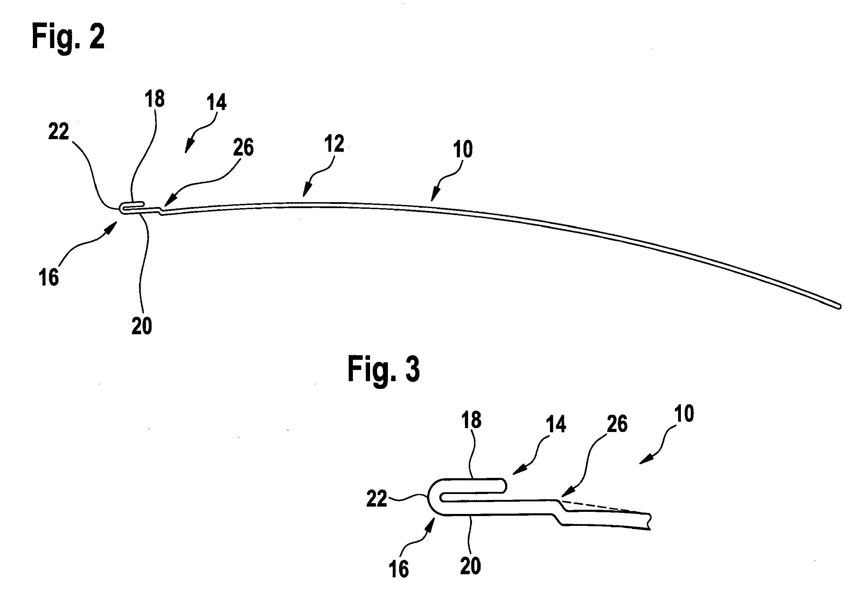

Zur Anbindung an einen Wischerarm, welcher mit einer Antriebseinrichtung der Wischereinrichtung verbunden oder gekoppelt ist, weist das Wischerschienenelement 10 den Anbindungsabschnitt auf. Der Anbindungsabschnitt 14 kann dabei einteilig mit dem Schienenelement 12 ausgebildet sein, wie in Fig. 1 und den nachfolgenden Fig. 2 bis 8 gezeigt ist.

In einer alternativen Ausführungsform kann der Anbindungsabschnitt 14 auch als separates Teil ausgebildet sein, wie in Fig. 1 mit einer gestrichelten Linie angedeutet ist und dabei auch einen Teil des Schienenelements bilden. Hierbei kann der Anbindungsabschnitt 14 mit dem Schienenelement 12 des Wischerschienenelements 10 beispielsweise lösbar verbunden werden, z.B. durch Verschrauben, Verclipsen und/oder Verrasten, um nur drei Beispiele für eine lösbare Verbindung von Anbindungsabschnitt 14 und Schienenelement 12 zu nennen. Ebenso kann der Anbindungsabschnitt 14 in einer anderen erfindungsgemäßen Ausführungsform auch fest mit dem Schienenelement 12 verbunden sein, beispielsweise mittels Schweißen, Löten, Kleben und/oder Nieten, um vier Beispiele für eine feste Verbindung von Anbindungsabschnitt 14 und Schienenelement 12 zu nennen. Die Erfindung ist auf die genannten Beispiele für eine lösbare und eine feste Verbindung nicht beschränkt. Es kann auch jede andere Befestigungsform oder Kombination von Befestigungsformen vorgesehen werden, die geeignet ist, den Anbindungsabschnitt 14 und das Schienenelement 12 lösbar oder fest bzw. nicht lösbar miteinander zu verbinden, um das Wischerschienenelement 10 zu bilden.

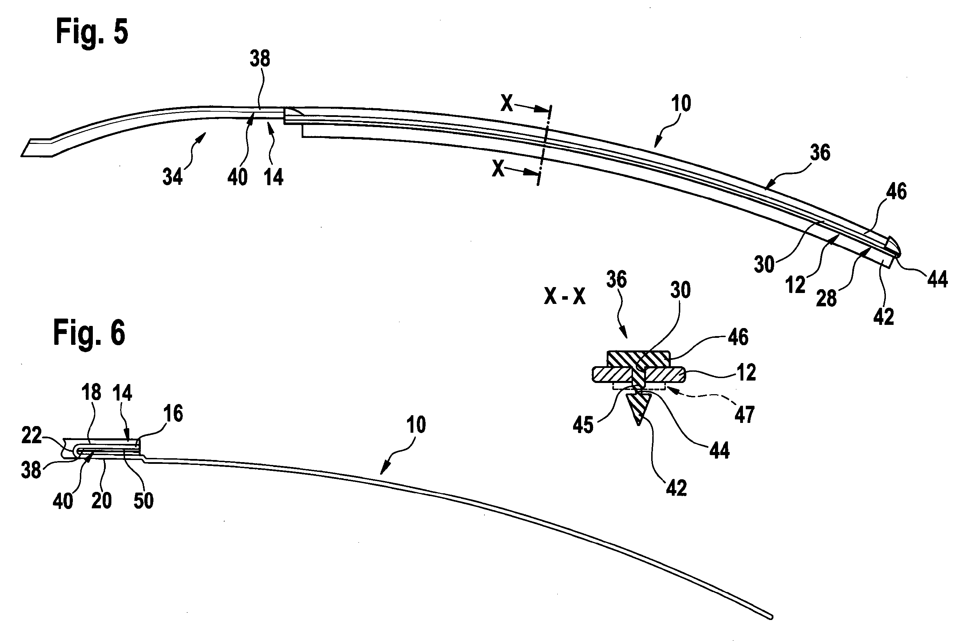

Wie in Fig.1 gezeigt ist, ist der Anbindungsabschnitt 14 beispielsweise in Form eines Hakens 16 ausgebildet, welcher in einer entsprechenden Aufnahme eines Wischerarms aufgenommen oder eingehakt wird, wie in nachfolgenden Fig. 5-8 gezeigt ist. Der Haken 16 bildet beispielsweise eine U-Form mit einem ersten und einem zweiten Abschnitt 18, 20, die über einen Mittenabschnitt 22 miteinander verbunden sind. Der erste, äußere Abschnitt 18 weist wahlweise zusätzlich, wie in Fig. 1 gezeigt ist, wenigstens eine Öffnung 24 mit oder ohne Gewinde auf, beispielsweise zum Verschrauben, Verrasten oder Verprägen mit dem Wischerarm, um das Wischerschienenelement 10 mit seinem Anbindungsabschnitt 14 zusätzlich an der Aufnahme des Wischerarms zu befestigen.

Der zweite, innere Abschnitt 20 des Hakens 16 ist mit dem Schienenelement 12 in Fig. 1 z.B. einstückig verbunden und kann wahlweise zusätzlich als Verbindung mit dem Schienenelement 12 eine Schräge (nicht dargestellt) oder einen Absatz 26 aufweisen, wie in Fig. 1 gezeigt ist, oder einen konstanten Übergang zu dem Schienenelement 12 bilden. Die Schräge oder der Absatz 26 kann derart ausgebildet sein, dass der Anbindungsabschnitt 14 oder Haken 16 etwas erhöht relativ zu dem Schienenelement 12 angeordnet ist. Durch die Höhe oder Erhöhung des Anbindungsabschnitts 14 bzw. des Hakens 16 gegenüber dem Schienenelement 12 ergibt sich eine zusätzliche Führung, die dem Kippen in dem Anbindungsabschnitt 14 entgegenwirkt. Der zweite Abschnitt 20 des Anbindungsabschnitts 14 kann in einer Ausführungsform dabei länger ausgebildet sein als der erste Abschnitt 18 und beispielsweise eine größere Dicke als das Schienenelement und/oder der erste Abschnitt 18 aufweisen.

Das Wischerschienenelement 10 bzw. dessen Schienenelement 12 weist außerdem eine Aufnahme 28 für ein Wischerblatt auf. Die Wischerblattaufnahme 28 weist dabei wenigstens einen Schlitz 30 auf, welcher sich in Längsrichtung des Wischerschienenelements 10 erstreckt. Der Schlitz 30 ist dabei durchgehend ausgebildet. Dabei kann des Weiteren wahlweise zusätzlich an einem oder beiden Enden des Schlitzes 30 eine Öffnung 32 vorgesehen sein, um das Einführen oder das Entfernen des Wischerblatts in den bzw. aus dem Schlitz 30 zu vereinfachen, so dass der Schlitz nicht aufgebogen werden muss, um das Wischerblatt einzuführen, sondern das Wischerblatt über die jeweilige Öffnung am Ende des Schlitzes in diesen eingeschoben oder eingeführt werden kann.

Der Schlitz 30 als Wischerblattaufnahme 28 hat hierbei den Vorteil, dass das Wischerblatt, welches normalerweise aus einem Gummimaterial hergestellt ist oder dieses zumindest aufweist, zum Einen einfach in den Schlitz 30 eingeführt und zum Anderen, im Betrieb während des Wischens der zugeordneten Fahrzeugscheibe mittels des Wischerblatts, in diesem zuverlässig gehalten werden kann. Außerdem kann das Wischerblatt, wenn es verschlissen ist, später sehr einfach durch ein neues Wischerblatt ersetzt werden.

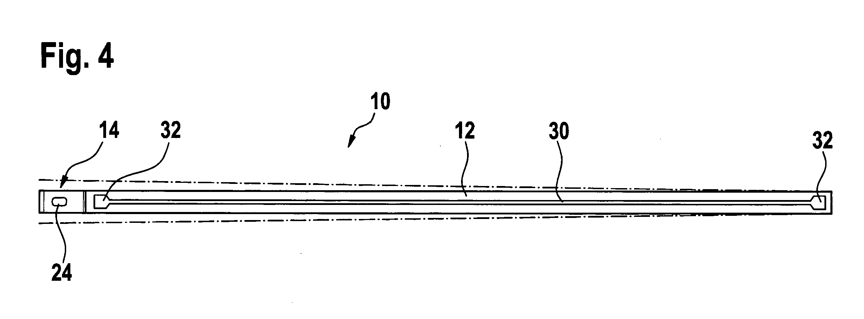

Wie in Fig.1 gezeigt ist, kann das Wischerschienenelement 10 bzw. sein Schienenelement 12 und/oder sein Anbindungsabschnitt 14, eine konstante Breite und/oder Dicke aufweisen. Ebenso kann das Wischerschienenelement 10 bzw. sein Schienenelement 12 und/oder sein Anbindungsabschnitt 14 aber auch bezüglich seiner Bereite und/oder Dicke variieren. Dabei kann sich das Schienenelement 12 beispielsweise in Längsrichtung hin zu seinem äußeren Ende bezüglich seiner Breite und/oder Dicke beispielsweise verjüngen, insbesondere konisch verjüngen, wie in nachfolgender Fig. 4 mit einer strichpunktierten Linie angedeutet ist.

In Fig. 2 ist eine Seitenansicht des Wischerschienenelements 10 gemäß Fig. 1 gezeigt. Wie zuvor mit Bezug auf Fig. 1 beschrieben weist das Wischerschienenelement 10 einen Anbindungsabschnitt 14 zur Anbindung an einen Wischerarm und einen Wischerarmantrieb auf. Dabei ist der Anbindungsabschnitt 14 beispielsweise als Haken 16 U-förmig ausgebildet, mit einem ersten und einem zweiten Abschnitt 18, 20, die über einen Mittenabschnitt 22 miteinander verbunden sind. Der zweite Abschnitt 20 weist des Weiteren einen zusätzlichen Absatz 26 bzw. eine Abstufung oder eine Schräge auf, über den der Anbindungsabschnitt 14 und das Schienenelement 12 des Wischerschienenelements 10 verbunden sind. Der Anbindungsabschnitt 14 oder Haken 16 bzw. Bogen dient zusätzlich als eine Art Gelenk im Sinne einer Nachfederung, um die Adaption oder Anpassung an eine Scheibenkrümmung einer mit der Wischereinrichtung zu wischenden Scheibe über den Wischerwinkel zu ermöglichen.

Das Wischerschienenelement 10 ist vorzugsweise aus einem Metallblech z.B. einem Stahlblech gebildet. Dabei wird das Wischerschienenelement 10 bzw. seine Federschiene 12 zunächst aus einem entsprechenden Blech als Formbiegeteil ausgestanzt und anschließend entsprechend gebogen. Im vorliegenden Beispiel wird einmal der Anbindungsabschnitt 14 zu einem Haken 16 gebogen und des Weiteren wahlweise zusätzlich die Federschiene 12 entsprechend gebogen oder mit einer Krümmung versehen, um an eine Scheibenkrümmung von zu wischenden Scheiben angepasst zu werden. Anschließend werden die geforderten Eigenschaften dem Federstahl der Federschiene verliehen. Dazu wird das Wischerschienenelement 10 getempert bzw. einer Wärmebehandlung unterzogen.

Fig. 3 zeigt einen vergrößerten Ausschnitt des Anbindungsabschnitts 14 des Wischerschienenelements 10 gemäß Fig. 2. Der Anbindungsabschnitt 14 ist dabei als U-förmiger Haken 16 oder Bogen gebogen, mit einem ersten und zweiten Abschnitt 18, 20, die über einen Mittenabschnitt 22 miteinander verbunden sind. Dabei weist der zweite Abschnitt 20 an seinem Ende zusätzlich eine Abstufung 26 oder Stufe auf, über die der Anbindungsabschnitt 14 mit dem Schienenelemente 12 verbunden ist. Ebenso können der Anbindungsabschnitt 14 und das Schienenelement 12 des Wischerschienenelements 10 auch stufenlos bzw. konstant ineinander übergehen und zusammen eine Gerade bilden oder eine Schräge (gepunktete Linie) in Längsrichtung.

Fig. 4 zeigt eine Draufsicht auf das Wischerschienenelement 10 gemäß Fig. 1 und 2. Hierbei ist das Wischerschienenelement 10 oder die Federschiene 12 mit dem Längsschlitz 30 als Wischerblattaufnahme 28 gezeigt, sowie der Anbindungsabschnitt 14 des Wischerschienenelements 10. Der Anbindungsabschnitt 14 weist des Weiteren eine zusätzliche Öffnung 24 zum Hindurchführen einer Schraube oder beim Verprägen eines Kunststoffmaterials auf, um das Wischerschienenelement 10 zusätzlich an einem Wischerarm zu befestigen.

Des Weiteren weist der Längsschlitz 30 hier an seinen beiden Enden jeweils eine zusätzliche Öffnung 32 auf. Die beiden Öffnungen 32 sind hierbei derart ausgebildet oder ausreichend groß dimensioniert, so dass ein Wischerblatt leicht in den Längsschlitz 30 eingeführt oder aus diesem wieder entfernt werden kann. Wie mit einer strichpunktierten Linie angedeutet, kann das Wischerschienenelement 10 über seine Breite in Längsrichtung auf einer oder beiden Seiten verjüngend, z.B. konisch verjüngend, ausgebildet werden. Entsprechendes gilt auch für die Dicke des Schienenelements 12 und/oder seines Anbindungsabschnitts 14.

Des Weiteren ist in Fig. 5 eine Seitenansicht einer Wischereinrichtung 34 mit einem Wischerschienenelement 10 gemäß Fig. 1 gezeigt, wobei in dem Wischerschienenelement 10 ein Wischerblatt 36 aufgenommen ist. Dabei ist in Fig. 5 auch eine Schnittansicht X-X der Wischereinrichtung 10 gezeigt.

Der Wischerarm 38 der Wischereinrichtung 34 ist mit einem Wischerantrieb (nicht dargestellt) verbunden oder gekoppelt zum Bewegen oder Drehen des Wischerarms 34 und des mit ihm verbundenen Wischerschienenelements 10 und seines Wischerblatts 36 oder Wischergummis. Der Wischerarm 38 weist eine entsprechende Aufnahme oder Aufnahmeeinrichtung 40 für das Wischerschienenelement 10 bzw. dessen Anbindungsabschnitt 14 auf. Zum Befestigen des Wischerschienenelements 10 ist die Aufnahmeeinrichtung 40 des Wischerarms 38 derart ausgebildet, dass der Anbindungsabschnitt 14 fest oder lösbar mit dem Wischerarm 38 verbunden werden kann und andererseits das Wischerschienenelement 10 mit seinem Wischerblatt 36 im Betrieb der Wischereinrichtung 34 fest verankert ist und bei Bedarf ausgewechselt werden kann. Dabei kann der Anbindungsabschnitt 14 an der Aufnahmeeinrichtung 40, neben dem Einhaken in die Aufnahmeeinrichtung 40, wahlweise zusätzlich beispielsweise mittels Verschrauben, Verrast, Verprägen, Verschweißen, Verlöten, Verkleben und/oder Verclipsen fest oder lösbar an dem Wischerarm 38 befestigt sein.

Des Weiteren ist, wie in Fig. 5 gezeigt, in der Wischerblattaufnahme 28 oder dem Schlitz 30 des Wischerschienenelements 10 ein Wischerblatt 36 aufgenommen. Das Wischerblatt 36 ist aus einem verformbaren oder elastischen Material, insbesondere Gummi, hergestellt und weist in der in Fig. 5 gezeigten Ausführungsform beispielsweise eine Wischerlippe 42 auf, die über einen elastischen Kippsteg 44 und einen Schlitzaufnahmeabschnitt 45 mit einer Rückenleiste 46 verbunden ist.

Nach dem Einführen des Wischerblatts 36 in die Aufnahme 28 bzw. den Schlitz 30 des Wischerschienenelements 10, befindet sich das Wischerschienenelement 10, wie in Fig. 5 und dem Schnitt X-X gezeigt, zwischen der Wischerlippe 42 und dem Rückenelement bzw. der Rückenleiste 46, während der Schlitzaufnahmeabschnitt 45 in dem Schlitz 30 aufgenommen ist.

Der Schlitzaufnahmeabschnitt 45 kann dabei auch derart ausgebildet sein, dass er mit der Rückenleiste 46 eine Nut 47 bildet, wie in dem Schnitt X-X in Fig. 5 mit einer gestrichelten Linie angedeutet ist, in welcher das Schienenelement 12 geführt ist.

Das Wischerblatt 36 oder z.B. der Schlitzaufnahmeabschnitt 45, welcher in dem Schlitz 30 des Wischerschienenelements 10 aufgenommen ist, weisen beispielsweise eine Länge auf, welche gleich oder im Wesentlichen gleich der Länge des Schlitzes 30 ist oder gleich oder im Wesentlichen gleich der Länge des Schlitzes 30 und wenigstens einer Öffnung 32 an einem oder beiden Enden des Schlitzes 30 ist.

Die Erfindung ist auf die spezielle Ausgestaltung des Wischerblatts 36, wie es mit Bezug auf Fig. 5 und den Schnitt X-X in Fig. 5 beschrieben wird, nicht beschränkt. Grundsätzlich kann jedes andere Wischerblatt 36 zum Wischen einer Scheibe, insbesondere einer Fahrzeugscheibe, vorgesehen werden, das geeignet ist in der Wischerblattaufnahme 28 in Form eines Schlitzes 30 in dem Wischerschienenelement 10 aufgenommen zu werden.

In Fig. 6 ist das Wischerschienenelement 10, sowie ein Teil der Anbindung an den Wischerarm 38 gemäß Fig. 5 gezeigt. Wie zuvor beschrieben ist der Anbindungsabschnitt 14 des Wischerschienenelements 10 als Haken 16 ausgebildet oder U-förmig gebogen, wobei ein erster und ein zweiter Abschnitt 18, 20 über einen Mittenabschnitt 22 miteinander verbunden sind.

Die Aufnahme 40 in dem Wischarm 38 kann nun, wie in Fig. 6 dargestellt, derart ausgebildet sein, dass sie als Aufnahmeeinrichtung 40 einen oberen und unteren Aufnahmeabschnitt 48, 50 aufweist, zwischen denen der Anbindungsabschnitt 14 oder der Haken 16 eingeschoben wird und beispielsweise fest zwischen dem oberen Aufnahmeabschnitt und einem unteren Aufnahmeabschnitt 50 gehalten wird. Wahlweise kann der Anbindungsabschnitt 14 oder Haken 16 auch mit der Aufnahmeeinrichtung 40 zusätzlich fest verbunden werden, d.h. lösbar oder nicht lösbar, beispielsweise mittels Verschrauben, Verrasten, Verclipsen, Verlöten, Verprägen, Verschweißen und/oder Verkleben. Zur Verrastung kann die Aufnahmeeinrichtung 40, d.h. ihr oberer und/oder unterer Aufnahmeabschnitt 50 wenigstens einen Vorsprung aufweisen, der in eine Aussparung bzw. Loch oder eine Vertiefung in dem Anbindungsabschnitt 14 einrastet (nicht dargestellt). Ebenso kann auch der Anbindungsabschnitt 14 mit wenigstens einem Vorsprung ausgebildet sein, welche mit einer zugeordneten Aussparung oder Vertiefung eines der Aufnahmeabschnitte 50 verrastet. Zum Verschrauben kann ein Schraube durch eine entsprechende Öffnung in der Aufnahmeeinrichtung 40 und dem Anbindungsabschnitt 14 eingeführt und mit diesem verschraubt werden. Ebenso können der Anbindungsabschnitt 14 und die Aufnahmeeinrichtung 40 durch Verprägen, z.B. mittels Kunststoff, miteinander fest verbunden werden. Die Aufnahmeeinrichtung oder der Wischarm können hierbei aus Kunststoff und/oder Metall ausgebildet sein oder diese zumindest aufweisen.

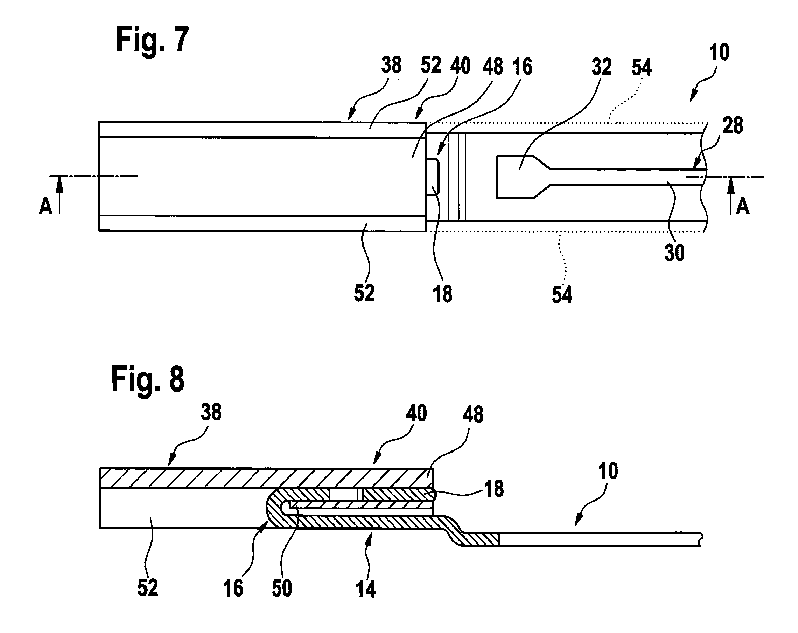

In Fig. 7 ist eine Draufsicht auf den Bereich der Anbindung des Wischerschienenelements 10 an den Wischerarm 38 gemäß Fig. 6 gezeigt. Dabei ist ein Ende der Wischerblattaufnahme 28 des Wischerschienenelements 10 gezeigt. Genauer gesagt ist ein Teil der als Längsschlitz 30 ausgebildeten Wischerblattaufnahme 28 gezeigt und eine Öffnung 32 an dem Ende des Längsschlitzes 30. Die Öffnung 32 weist dabei eine Breite auf, die größer ist als die Breite des Längsschlitzes 30, um ein Einführen und Einklemmen des Wischerblatts in die Wischerblattaufnahme 28 bzw. den Längsschlitz 30 zu vereinfachen.

Des Weiteren ist die Anbindung bzw. der untere Abschnitt der Aufnahmeeinrichtung 40 des Wischerarms 38 für den Anbindungsabschnitt 14 von oben nicht sichtbar. Wie in Fig. 6 gezeigt ist, kann ein Stück des ersten oder äußeren Abschnitts 18 des Anbindungsabschnitts 14 bzw. Hakens 16 aus der Aufnahmeeinrichtung 40 hervorstehen oder mit dieser z.B. im Wesentlichen abschließen, wenn das Wischerschienenelement 10 mit seinem Anbindungsabschnitt 14 vollständig zwischen den beiden Aufnahmeabschnitten der Aufnahmeeinrichtung 40 eingeführt oder aufgenommen ist.

Ebenso kann der Wischerarm 38 über eine Teil oder das gesamte Schienenelement 12 und seinen Wischergummi 36 ragen, wie in Fig. 7 mit einer punktierten Linie angedeutet ist. Der Wischerarm 38 umschließt dabei das Schienenelement 12 auf einer oder beiden Seiten seitlich, so dass im Betrieb das Wischerschienenelement 10 sich beim Wischen einer Scheibe nicht ungewollt seitlich aus dem Wischerarm 38 herausbewegt, sondern durch die Seitenwände 54 des Wischarms entsprechend gehalten wird. Auf diese Weise wird sichergestellt, dass sich das Wischerschienenelement 10 und sein Wischergummi 36 mit dem Wischarm 38 deckungsgleich mitbewegt.

Im Falle einer lösbaren Anbindung des Wischerschienenelements 10 an den Wischerarm 38, wird das Wischerschienenelement 10 lediglich in Richtung des Wischerarms 38 bzw. aus den Aufnahmeabschnitten 48 der Aufnahmeeinrichtung 40 heraus geschoben, sofern es mit diesen nicht fest verbunden ist, z.B. durch Schweißen, Löten, Kleben, Verprägen usw.. Bei einer zusätzlichen Verschraubung des lösbar mit der Aufnahmeeinrichtung 40 verbundenen Anbindungsabschnitts 14, muss zunächst die Schraubenverbindung gelöst werden, wobei z.B. bei einer zusätzlichen Verschraubung der Anbindungsabschnitts 14 nicht notwendigerweise fest zwischen dem ersten und zweiten Aufnahmeabschnitt 48 der Aufnahmeeinrichtung 40 eingeklemmt sein muss.

Des Weiteren weist der Anbindungsabschnitt 14 oder zumindest der Teil des Anbindungsabschnitts 14, der zwischen die Aufnahmeabschnitte 48 der Aufnahmeinrichtung 40 des Wischerarms 38 eingeführt wird, eine Breite auf, die vorzugsweise gleich oder im Wesentlichen gleich dem Abstand zweier Seitenwände 52 der Aufnahmeeinrichtung 40 ist, zwischen denen die beiden Aufnahmeabschnitte 48 der Aufnahmeeinrichtung 40 angeordnet sind. Sind die Aufnahmeeinrichtung 40 und der Anbindungsabschnitt 14 beide aus Metall, so kann auch zusätzlich ein Dämpfungselement z.B. aus Kunststoff zwischen der Aufnahmeeinrichtung 40 und dem Anbindungsabschnitt 14 vorgesehen werden, um unerwünschte Geräusche zumindest zu reduzieren. Ist der Anbindungsabschnitt 14 und/oder die Aufnahmeeinrichtung 40 aus Kunststoff, so ist ein solches Dämpfungselement nicht unbedingt notwendig, so dass, wie zuvor beschrieben, die Breite des Anbindungsabschnitts 14 vorzugsweise gleich dem Abstand der Seitenwände 52 der Aufnahmeeinrichtung 40 ist.

Der Anbindungsabschnitt 14 bzw. der Haken 16 wird einerseits zwischen den ersten und zweiten Aufnahmeabschnitt 48 der Aufnahmeeinrichtung 40 eingeführt und zwischen diesen eingeklemmt und andererseits durch die Seitenwände 52, welche die beiden Aufnahmeabschnitte 48 seitlich begrenzen, zusätzlich seitlich gehalten. Dies hat den Vorteil, dass der Anbindungsabschnitt 14 seitlich zusätzlich geführt und stabilisiert werden kann, so dass er sich nicht ungewollt in der Aufnahmeeinrichtung 40 verdrehen kann.

Fig. 8 zeigt eine Schnittansicht A-A der Anbindung des Wischerschienenelements 10 an den Wischerarm 38 gemäß Fig. 7. Wie zuvor beschrieben ist die Aufnahmeeinrichtung 40 in dem Wischarm 38 derart ausgebildet, dass sie einen oberen und unteren Aufnahmeabschnitt 48, 50 aufweist, zwischen denen der Anbindungsabschnitt 14 oder der Haken 16 eingeschoben wird, wobei die Aufnahmeabschnitte 48, 50 durch die Seitenwände 52 auf beiden Seiten begrenzt werden und so den Anbindungsabschnitt 14 seitlich zusätzlich halten. Wie in Fig. 8 gezeigt ist, ist der erste Abschnitt 18 des Hakens 16 zwischen den oberen und unteren Abschnitt 48, 50 der Aufnahmeeinrichtung 40 eingeschoben, wobei die beiden Abschnitte 48, 50 so zueinander positioniert werden können, dass sie den Anbindungsabschnitt 14 fest dazwischen einklemmen oder halten, ebenso können sie diesen auch nur lose halten, wenn beispielsweise eine zusätzliche Befestigung mittels Verschrauben, Verschweißen, Verlöten, Verkleben, Verklipsen, Vernieten und/oder Verprägen usw. vorgesehen wird.

Das Wischerschienenelement oder die Federschiene hat den Vorteil, dass sie die Montage des Wischerblatts erheblich vereinfacht. Des Weiteren ist sie kostengünstig, da die Wischereinrichtung weniger Teile aufweist, die hergestellt und montiert werden müssen. Dabei können mehrere Funktionen in einem Teil integriert werden und dadurch die Teilezahl reduziert werden. Ein weiterer Vorteil der Wischereinrichtung mit dem erfindungsgemäßen Wischerschienenelement ist, dass eine praktisch spielfreie Anbindung an einen Wischerarm bereitgestellt werden kann. Die Anbindung liegt dabei in einem nicht sichtbaren Bereich des Wischerarms. Gemäß der Erfindung wird beispielsweise von einem gelenkfreien Wischerblatt ausgegangen. Die Einhängung des Wischerschienenelements in den Wischerarm kann dabei am Wischerblattinnenkreisbereich erfolgen. Die zuvor beschriebenen Ausführungsformen können auch miteinander kombiniert werden, insbesondere einzelne Merkmale davon.

Ein Wischerschienenelement gemäß der Erfindung kann die zuvor beschriebene Wischerblattaufnahme 28 in Form eines Schlitzes 30 mit wahlweise einer oder zwei Öffnungen 32 am Ende aufweisen, unabhängig von dem Anbindungsabschnitt 14, wie er zuvor mit Bezug auf die Fig. 1-8 beschrieben wurde. Stattdessen kann eine völlig andere Anbindung an einen Wischerarm vorgesehen werden. Ebenso kann gemäß der Erfindung ein Wischerschienenelement 12 mit dem zuvor beschriebenen Anbindungsabschnitt 14 und seiner Anbindung über eine Aufnahmeeinrichtung 40 im Wischerarm 38 unabhängig von der speziellen Schlitzkonstruktion 30 oder Wischerblattaufnahme 28 vorgesehen werden. Stattdessen kann eine völlig andere Wischerblattbefestigung vorgesehen werden.

## Patentansprüche

1. Wischerschienenelement (10) mit einem Schienenelement (12) zur Aufnahme eines Wischerblatts (36),
und einem Anbindungsabschnitt (14), welcher als Haken (16) zum Einhaken und Befestigen an einem Wischerarm ausgebildet ist,
**dadurch gekennzeichnet, dass**
der Anbindungsabschnitt (14) gegenüber dem Schienenelement (12) erhöht vorgesehen ist und mit dem Schienenelement (12) über einen Absatz (26) verbunden ist..

2. Wischerschienenelement nach Anspruch 1, **dadurch gekennzeichnet, dass** der Anbindungsabschnitt (14) fest oder lösbar mit einer Aufnahmeeinrichtung (40) des Wischerarms (38) verbindbar ist.

3. Wischerschienenelement nach Anspruch 1 oder 2, **dadurch gekennzeichnet, dass** der Anbindungsabschnitt (14) einstückig mit dem Schienenelement (12) ausgebildet ist oder als separates Teil mit dem Schienenelement (12) fest oder lösbar verbunden ist.

4. Wischerschienenelement nach einem der Ansprüche 1 bis 3, **dadurch gekennzeichnet, dass** das Schienenelement (12) eine Wischerblattaufnahme (28) aufweist, wobei die Wischerblattaufnahme (28) insbesondere als Schlitz (30) ausgebildet ist und insbesondere zusätzlich an einem oder beiden Enden eine Öffnung (32) zum Einführen eines Wischerblatts (36) aufweist.

5. Wischerschienenelement nach einem der Ansprüche 1 bis 4, **dadurch gekennzeichnet, dass** das Schienenelement (12) und/oder der Anbindungsabschnitt (14) als Metallblech hergestellt ist, insbesondere als Federblech aus einem getemperten Metallblech.

6. Wischerschienenelement nach einem der Ansprüche 1 bis 5, **dadurch gekennzeichnet, dass** der Anbindungsabschnitt (14) als Haken (16) U-förmig ausgebildet ist, mit einem ersten Abschnitt (18) und einem zweiten Abschnitt (20), welche über einen Mittenabschnitt (22) miteinander verbunden sind, wobei der zweite Abschnitt (20) mit dem Schienenelement (12) verbunden ist und der erste Abschnitt (18) in eine Aufnahmeeinrichtung (40) des Wischerarms (38) einführbar oder einhakbar ist zur Befestigung des Wischerschienenelements (10) an dem Wischerarm (38).

7. Wischereinrichtung (34) mit einem Wischerschienenelement (10) nach einem der Ansprüche 1 bis 6.

8. Wischereinrichtung nach Anspruch 7, **dadurch gekennzeichnet, dass** ein Wischerarm (38) der Wischereinrichtung (34), eine Aufnahmeeinrichtung (40) aufweist zur Aufnahme des Anbindungsabschnitts (14) des Wischerschienenelements (10), wobei die Aufnahmeeinrichtung (40) einen oberen und einen unteren Aufnahmeabschnitt (48, 50) aufweist, zwischen die der erste oder äußere Abschnitt (18) des Anbindungsabschnitts (14) einführbar ist, wobei der Anbindungsabschnitt (14) mit der Aufnahmeeinrichtung (40) des Wischerarms (38) fest oder lösbar verbindbar ist.

9. Wischereinrichtung nach Anspruch 7 oder 8 **dadurch gekennzeichnet, dass** der Wischarm (38) Seitenwände (52, 54) aufweist, welche die Aufnahmeeinrichtung (40) und damit den dort aufgenommenen Anbindungsabschnitt (14) seitlich begrenzen oder halten und wobei insbesondere der Wischerarm (38) mit seinen Seitenwänden (52) im Wesentlichen mit der Aufnahmeeinrichtung (40) abschließt oder sich mit seinen Seitenwänden (54) teilweise oder Vollständig in Längsrichtung über das Wischerschienenelement erstreckt und wahlweise zusätzlich mit diesen verbunden ist.

## Claims

1. Wiper rail element (10) having a rail element (12) for receiving a wiper blade (36),
and a connection section (14) which is designed as a hook (16) for hooking into and fastening to a wiper arm, **characterized in that** the connection section (14) is provided in raised form in relation to the rail element (12) and is connected to the rail element (12) via a step (26).

2. Wiper rail element according to Claim 1, **characterized in that** the connection section (14) is connectable fixedly or releasably to a receiving device (40) of the wiper arm (38).

3. Wiper rail element according to Claim 1 or 2, **characterized in that** the connection section (14) is formed integrally with the rail element (12) or is fixedly or releasably connected as a separate part to the rail element (12).

4. Wiper rail element according to one of Claims 1 to 3, **characterized in that** the rail element (12) has a wiper blade receptacle (28), wherein the wiper blade receptacle (28) is designed in particular as a slot (30) and in particular additionally has an opening (32) at one or both ends for insertion of a wiper blade (36).

5. Wiper rail element according to one of Claims 1 to 4, **characterized in that** the rail element (12) and/or the connection section (14) are/is produced in the form of a metal sheet, in particular as a spring sheet made from a tampered metal sheet.

6. Wiper rail element according to one of Claims 1 to 5, **characterized in that** the connection section (14) is of U-shaped design in the form of a hook (16), with a first section (18) and a second section (20), which are connected to each other via a central section (22), wherein the second section (20) is connected to the rail element (12) and the first section (18) is insertable or hookable into a receiving device (40) of the wiper arm (38) in order to fasten the wiper rail element (10) to the wiper arm (38).

7. Wiper device (34) with a wiper rail element (10) according to one of Claims 1 to 6.

8. Wiper device according to Claim 7, **characterized in that** a wiper arm (38) of the wiper device (34) has a receiving device (40) for receiving the connection section (14) of the wiper rail element (10), wherein the receiving device (40) has an upper and a lower receiving section (48, 50), between which the first or outer section (18) of the connection section (14) is insertable, wherein the connection section (14) is fixedly or releasably connectable to the receiving device (40) of the wiper arm (38).

9. Wiper device according to Claim 7 or 8, **characterized in that** the wiper arm (38) has side walls (52, 54) which laterally bound or hold the receiving device (40) and therefore the connection section (14) accommodated there, and wherein, in particular, the wiper arm (38) essentially ends by means of the side walls (52) thereof with the receiving device (40), or, by means of the side walls (54) thereof, extends partially or completely in the longitudinal direction over the wiper rail element and is optionally additionally connected thereto.

## Revendications

1. Élément porte-balai d'essuie-glace (10) comprenant un élément porte-balai (12) pour recevoir un balai d'essuie-glace (36),
et une portion d'attache (14), laquelle est réalisée sous forme de crochet (16) pour l'accrochage et la fixation à un bras d'essuie-glace,
**caractérisé en ce que**
la portion d'attache (14) est prévue de manière surélevée rapport à l'élément porte-balai (12) et est reliée à l'élément porte-balai (12) par le biais d'un épaulement (26).

2. Élément porte-balai d'essuie-glace selon la revendication 1, **caractérisé en ce que** la portion d'attache (14) peut être reliée de manière fixe ou amovible à un dispositif de réception (40) du bras d'essuie-glace (38).

3. Élément porte-balai d'essuie-glace selon la revendication 1 ou 2, **caractérisé en ce que** la portion d'attache (14) est réalisée d'une seule pièce avec l'élément porte-balai (12) ou est reliée de manière fixe ou amovible à l'élément porte-balai (12) en tant que partie séparée.

4. Élément porte-balai d'essuie-glace selon l'une quelconque des revendications 1 à 3, **caractérisé en ce que** l'élément porte-balai (12) comprend un logement de balai d'essuie-glace (28), le logement de balai d'essuie-glace (28) étant en particulier réalisé sous la forme d'une fente (30) et comprenant en particulier en plus, à une extrémité ou aux deux extrémités, une ouverture (32) pour l'insertion d'un balai d'essuie-glace (36).

5. Élément porte-balai d'essuie-glace selon l'une quelconque des revendications 1 à 4, **caractérisé en ce que** l'élément porte-balai (12) et/ou la portion d'attache (14) sont fabriqués à partir de tôle métallique, en particulier sous forme de tôle à ressort à partir d'une tôle métallique trempée.

6. Élément porte-balai d'essuie-glace selon l'une quelconque des revendications 1 à 5, **caractérisé en ce que** la portion d'attache (14) est réalisée en forme de U en tant que crochet (16), avec une première portion (18) et une deuxième portion (20), lesquelles sont reliées l'une à l'autre par le biais d'une portion centrale (22), la deuxième portion (20) étant reliée à l'élément porte-balai (12) et la première portion (18) pouvant être insérée ou accrochée dans un dispositif de réception (40) du bras d'essuie-glace (38) en vue de la fixation de l'élément porte-balai d'essuie-glace (10) au bras d'essuie-glace (38).

7. Dispositif d'essuie-glace (34) comprenant un élément porte-balai d'essuie-glace (10) selon l'une quelconque des revendications 1 à 6.

8. Dispositif d'essuie-glace selon la revendication 7, **caractérisé en ce qu'**un bras d'essuie-glace (38) du dispositif d'essuie-glace (34) comprend un dispositif de réception (40) pour recevoir la portion d'attache (14) de l'élément porte-balai d'essuie-glace (10), le dispositif de réception (40) comprenant une portion de réception supérieure et une portion de réception inférieure (48, 50), entre lesquelles la première portion ou portion extérieure (18) de la portion d'attache (14) peut être insérée, la portion d'attache (14) pouvant être reliée de manière fixe ou amovible au dispositif de réception (40) du bras d'essuie-glace (38).

9. Dispositif d'essuie-glace selon la revendication 7 ou 8, **caractérisé en ce que** le bras d'essuie-glace (38) comprend des parois latérales (52, 54), lesquelles limitent ou retiennent latéralement le dispositif de réception (40) et par conséquent la portion d'attache (14) qui y est reçue et, en particulier, le bras d'essuie-glace (38) se terminant, avec ses parois latérales (52), essentiellement par le dispositif de réception (40) ou s'étendant, par ses parois latérales (54), partiellement ou complètement dans la direction longitudinale au-delà de l'élément porte-balai d'essuie-glace et étant en plus relié de manière sélective à celui-ci.
